# EUROPEAN PATENT APPLICATION

(11) **EP 2 591 902 A2**
(43) Date of publication of application: **15.05.2013**
(21) Application number: 12191850.2
(22) Date of filing: 08.11.2012
(51) Int. Cl.: B29C 33/38, B29C 33/02

(54) **Methods of manufacturing tooling structures and tooling structures**

(30) Priority: 08.11.2011 US 201113291236
(71) Applicant: General Electric Company, Schenectady, NY 12345 (US)
(72) Inventor: Starke, Andreas Gehard Walter, 48499 Salzbergen (DE)
(74) Representative: Bedford, Grant Richard

(57) **Abstract**

Methods of manufacturing a tooling structure (200) for tooling a fiber reinforced plastic component include providing a plurality of tooling blocks (210) each comprising a filler material (211) and a reinforcing structural layer (212), joining the plurality of tooling blocks (210) into a series of tooling blocks (210) extending in a lengthwise direction, wherein the reinforcing structural layers (212) form a plurality of cross-sectional ribs, and shaping the series of tooling blocks (210) into the tooling structure (200).

## Description

The subject matter disclosed herein relates generally to tooling structures and, more specifically, to methods of manufacturing tooling structures for tooling fiber reinforced plastic components such as rotor blades for wind turbines.

Components comprising fiber reinforced plastics can be utilized in a variety of different fields for a variety of applications. One such example includes wind power. Wind power is considered one of the cleanest, most environmentally friendly energy sources presently available, and wind turbines have gained increased attention in this regard. A wind turbine can include a tower, generator, gearbox, nacelle, and one or more rotor blades comprising a composite material. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

In manufacturing the composite based rotor blades, specialized tooling and/or molds may be required. For example, the rotor blade halves of a conventional rotor blade can be formed in large rotor blade molds that are custom made for the particular size and shape of the rotor blade being produced. Accordingly, new rotor blade molds must be purchased or otherwise made for each rotor blade size and shape being produced, which greatly increases the productions costs of rotor blades. In addition, the rotor blade molds themselves may be manufactured from rotor blade plugs requiring an even additional level of manufacturing for each type of rotor blade to be produced. However, manufacturing rotor blade plugs and rotor blade molds, as wells as other composite material based structures, can become costly as they can require significant customization of expensive and labor intensive materials.

Accordingly, alternative methods of manufacturing tooling structures such as for tooling rotor blades for wind turbines would be welcome in the art.

In one embodiment, a method is disclosed of manufacturing a tooling structure for tooling a fiber reinforced plastic. The method includes providing a plurality of tooling blocks each comprising a filler material and a reinforcing structural layer, joining the plurality of tooling blocks into a series of tooling blocks extending in a lengthwise direction, wherein the reinforcing structural layers form a plurality of cross-sectional ribs, and shaping the series of tooling blocks into the tooling structure.

In another embodiment, a tooling structure is disclosed for tooling a fiber reinforced plastic component. The tooling structure can include a plurality of tooling blocks each including a filler material and a reinforcing structural layer. The plurality of tooling blocks can be joined in a series of tooling blocks extending in a lengthwise direction, wherein the reinforcing structural layers form a plurality of cross-sectional ribs separated by the filler material, and the series of tooling blocks can be shaped into the tooling structure.

Various features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a perspective view of a wind turbine according to one or more embodiments shown or described herein;
FIG. 2 is a perspective view of a rotor blade according to one or more embodiments shown or described herein;
FIG. 3 is an exemplary method for manufacturing a rotor blade tooling structure according to one or more embodiments shown or described herein;
FIG. 4 is a perspective view of a tooling block sheet according to one or more embodiments shown or described herein;
FIG. 5 is a perspective view of a joined series of tooling blocks according to one or more embodiments shown or described herein;
FIG. 6 is a perspective view of a rotor blade tooling structure with a common base frame according to one or more embodiments shown or described herein;
FIG. 7 is a perspective view of a rotor blade tooling structure with a cover sheeting and a common base frame according to one or more embodiments shown or described herein;
FIG. 8 is a perspective view of a rotor blade tooling structure with machine paste and a common base frame according to one or more embodiments shown or described herein; and
FIG. 9 is a perspective view of a rotor blade tooling structure with a finished surface and a common base frame according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Methods of manufacturing tooling structures and the tooling structures derived from such methods are disclosed herein. The methods and tooling structures can be applied to the manufacturing of any fiber reinforced plastic component such as, for example, one or more components in turbines (e.g., wind turbines), boats, aircrafts, gliders, and/or any other component comprising fiber reinforced plastics. For example, the methods and tooling structures disclosed herein can be utilized in the manufacturing of one or more wind turbine components including, but not limited to, rotor blades, nacelles or spinners. Likewise, the methods and tooling structures disclosed herein may also be utilized in the manufacturing of fuselages for aircraft or hulls for boats. Moreover, the methods and tooling structures disclosed herein can be utilized in pipes and fittings (such as related to water processing), automotive bodies, construction or other suitable fields such as when structural strength coupled with weight savings is desired. As such, the methods and tooling structures disclosed herein can be utilized in the more efficient utilization and conservation of energy resources, such as by promoting the more efficient production and application of key components of wind turbines, to materially enhance the quality of the environment by contributing to the restoration r maintenance of the basic life-sustaining natural elements. While numerous application examples are presented herein, it should be appreciated that these are exemplary only and non-limiting and any other application of this disclosure for manufacturing fiber reinforced plastic components may alternatively or additionally be realized.

While the methods and tooling structures disclosed herein can be realized in numerous different applications, for explanatory purposes only the methods and resulting tooling structures will now be described herein with specific reference to rotor blades for wind turbines. However, as discussed above, it should be appreciated that this description specific to rotor blades for wind turbines may similarly extend to any other application of manufacturing fiber reinforced plastic components. Generally, a plurality of tooling blocks comprising filler material and reinforcing structural layers are provided, such as by sectioning of a plurality of tooling blocks from a single tooling block sheet. The plurality of tooling blocks can then be joined in a lengthwise or spanwise direction (i.e., the direction a rotor blade extends) such that the reinforcing structural layers for a plurality of cross-sectional ribs to provide stiffness and/or strength along the spanwise direction. The series of tooling blocks can then be shaped into a rotor blade tooling structure such as a rotor blade plug (which can be used to manufacture a rotor blade mold) or a rotor blade mold itself.

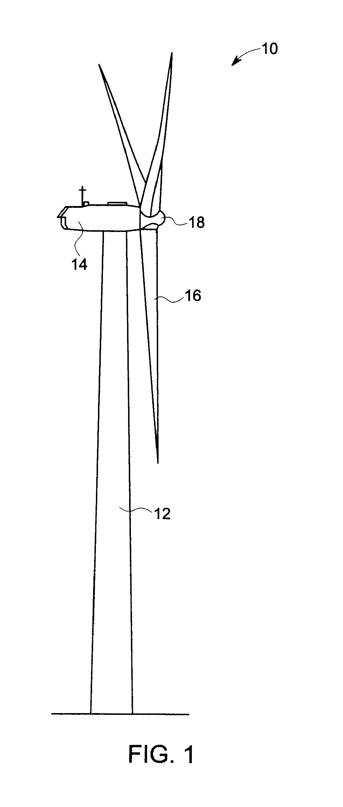

Referring now to FIG. 1, a perspective view of a wind turbine 10 is illustrated. The wind turbine 10 can generally comprise a nacelle 14 mounted on a tower 12. A plurality of rotor blades 16 can be mounted to a rotor hub 18 which can be connected to a main flange that turns a main rotor shaft (not illustrated). The wind turbine power generation and control components can be housed within the nacelle 14. It should be appreciated that the wind turbine 10 illustrated in FIG. 1 is provided for illustrative purposes only and not intended to limit the application of this disclosure to a specific wind turbine type or configuration.

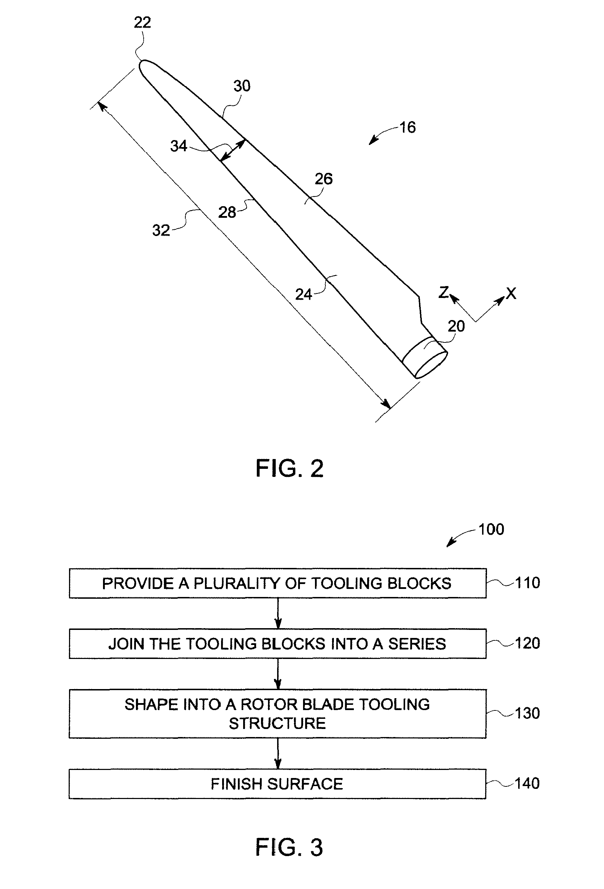

Referring now to FIG. 2, a perspective view of a rotor blade 16 is illustrated. The rotor blade 16 can include a blade root 20 for mounting the rotor blade 16 to a mounting flange (not illustrated) of the wind turbine hub 18 (illustrated in FIG. 1) and a blade tip 22 disposed opposite the blade root 20. The rotor blade 16 may comprise a pressure side 24 and a suction side 26 extending between a leading edge 28 and a trailing edge 30. In addition, the rotor blade 16 may include a span 32 defining the total length between the blade root 20 and the blade tip 22. The rotor blade 16 can further comprise a chord 34 defining the total length between the leading edge 28 and the trailing edge 30. It should be appreciated that the chord 34 may vary in length with respect to the span 32 as the rotor blade 16 extends from the blade root 20 to the blade tip 22.

The rotor blade 16 may define any suitable aerodynamic profile. Thus, in some embodiments, the rotor blade 16 may define an airfoil shaped cross-section. For example, the rotor blade 16 may also be aeroelastically tailored. Aeroelastic tailoring of the rotor blade 16 may entail bending the blade 16 in generally a chordwise direction x and/or in a generally spanwise direction z. As illustrated, the chordwise direction x generally corresponds to a direction parallel to the chord 34 defined between the leading edge 28 and the trailing edge 30 of the rotor blade 16. Additionally, the spanwise direction z generally corresponds to a direction parallel to the span 32 of the rotor blade 16. In some embodiments, aeroelastic tailoring of the rotor blade 16 may additionally or alternatively comprise twisting the rotor blade 16, such as by twisting the rotor blade 16 in generally the chordwise direction x and/or the spanwise direction z.

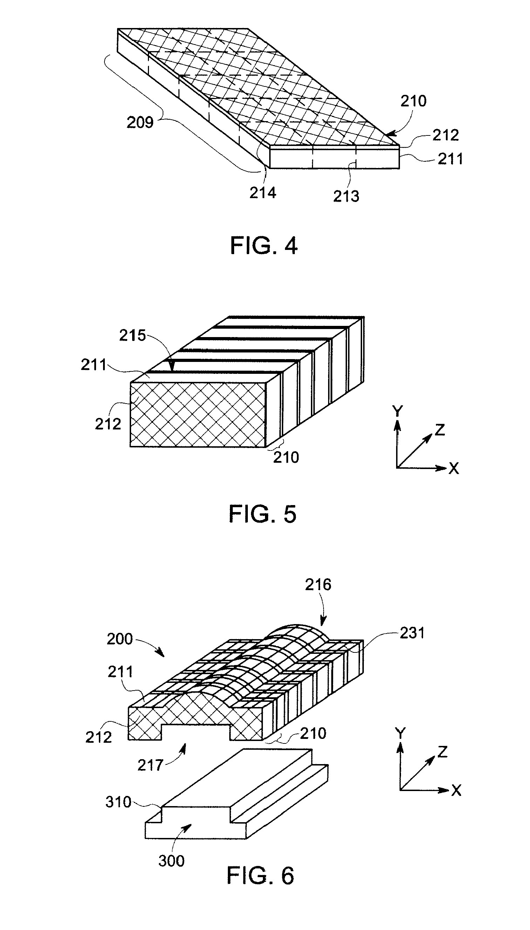

Referring now to FIGS. 1-5, a method 100 (illustrated in FIG. 3) of manufacturing a rotor blade tooling structure 200 for tooling a rotor blade 16 (such as a rotor blade for a wind turbine 10) is disclosed. The method 100 generally comprises providing a plurality of tooling blocks 210 in step 110, joining the plurality of tooling blocks 210 into a series of tooling blocks 210 in step 120, and shaping the series of tooling blocks 210 into a rotor blade tooling structure 200 in step 130. The method 100 may optionally further comprise additional finishing steps 140 to modify the rotor blade tooling structure 200. The method 100 will be further described with additional reference to the structural elements illustrated in FIGS. 4-9.

Referring now to FIGS. 3 and 4, as discussed above the method 100 first comprises providing a plurality of tooling blocks 210 in step 110. Tooling blocks 210 can comprise any structure comprising a filler material 211 and a reinforcing structural layer 212 integral with the filler material 211. The filler material 211 may generally comprise any suitable material which is capable of being machined or otherwise shaped into the profile of the rotor blade tooling structure 200 illustrated in FIG. 6. For example, in some embodiments, the filler material 211 may comprise a relatively lightweight, low-density material such as a low-density foam or core material. Such low-density foams may include, for example, polystyrene foams (e.g., expanded polystyrene foams), polyurethane foams, other foam rubbers, resin-based foams and/or other open cell and closed cell foams or combinations thereof. In some embodiments, the filler material 211 may comprise other suitable low-density materials such as balsa wood, cork and the like.

The reinforcing structural layer 212 may generally comprise any material or materials that can provide a layer of structural support to the filler material 211. For example, the reinforcing structural layer 212 can provide structural support for the filler material 211 during manufacturing of the rotor blade tooling structure 200. Additionally, the reinforcing structural layer 212 can provide stiffness and/or strength to the rotor blade tooling structure 200 manufacturing operation as will become appreciated herein. Thus, it should be appreciated that the reinforcing structural layer 212 may generally have any suitable shape, size, cross-section and/or configuration that permits the reinforcing structural layer 212 to structurally support the filler material 211. In some exemplary embodiments, the reinforcing structural layer 212 may comprise a relatively stiff and/or durable material to provide stiffness and/or strength such as any suitable laminate composite materials (e.g., fiber-reinforced laminates), polymers (e.g., high strength plastics), metals (e.g., aluminum), wood or combinations thereof. However, while specific materials are listed herein, it should be appreciated that the reinforcing structural layer 212 may additionally or alternatively comprise any other suitable material.

As best illustrated in FIG. 4, in some embodiments the tooling block 210 may comprise on orientation wherein a single reinforcing structural layer 212 is disposed on top of the filler material 211. However, it should also be appreciated that any other suitable orientation and configuration of the reinforcing structural layer 212 and the filler material 211 may also be realized. For example, in some embodiments, the reinforcing structural layer 212 may be disposed on the bottom of the filler material 211 or in the middle of the filler material 211. Moreover, in some embodiments, the tooling block 210 may comprise multiple reinforcing structural layers 212. The multiple reinforcing structural layers 212 may be separated by filler material 211, may be disposed directly adjacent to one another, or may randomly or consistently vary in their separation (e.g., some reinforcing structural layers 212 are disposed directly adjacent to one another and some reinforcing structural layers 212 are separated by filler material 211). Moreover, in tooling blocks 210 comprising multiple reinforcing structural layers 212, the multiple reinforcing structural layers 212 may each comprise the same material, or may comprise different materials such as to provide different levels of structural support at different locations.

In some embodiments, the plurality of tooling blocks 210 may be provided as a plurality of individual tooling blocks 210 manufactured independent of one another. However, in some embodiments, such as that illustrated in FIG. 4, at least some of the plurality of tooling blocks 210 may be sectioned off from a larger tooling block sheet 209. For example, a single tooling block sheet 209 can comprise the filler material 211 and the reinforcing structural layer 212. One or more first cuts 213 may then be applied about one direction of the tooling block sheet 209 to section the tooling block sheet 209 into a plurality of smaller sections. In some embodiments, one or more second cuts 214 may also be applied about another direction (e.g., a direction perpendicular to the direction of the first cuts 213), to further separate the tooling block sheet 209 into even smaller sections. These sections of the tooling block sheet 209 can then be utilized as the tooling blocks 210 for manufacturing the rotor blade tooling structure 200. The sectioning of a tooling block sheet 209 into a plurality of individual tooling blocks 210 may be realized through any suitable mode of separation such as, for example, cutting via blades, lasers or other device(s), slicing, breaking or any other means of separation or combinations thereof.

Referring now to FIGS. 3-5, the method 100 further comprises joining a plurality of tooling blocks 210 into a series of tooling blocks 210 in step 120. The series of tooling blocks 210 can extend in a spanwise direction z wherein the reinforcing structural layers 212 form a plurality of cross-sectional ribs separated by the filler material 211. As discussed above with reference to FIG. 2, the spanwise direction z can comprise the direction that a rotor blade 16 extends. As best illustrated in FIG. 5, the plurality of reinforcing structural layers 212 can comprise a plurality of cross-sectional ribs about the *x-y* plane substantially perpendicular to the spanwise direction z. The plurality of reinforcing structural layers 212 acting as cross-sectional ribs can thereby provide stiffness and/or strength such as to resist bending forces about the spanwise direction z.

Joining the plurality of tooling blocks 210 into a series of tooling blocks 210 in step 120 can comprise the use of any number of tooling blocks 210 which can include any total number of reinforcing structural layers 212. For example, in some embodiments, enough tooling blocks 210 may be joined together into a series in step 120 to exceed the final dimensions of the rotor blade tooling structure 200 that is to be manufactured as will become appreciated herein. However, in some embodiments, the total length, width and/or height of the joined tooling blocks 210 may comprise a dimension less than the rotor blade tooling structure 200 that is to be manufactured such that multiple sections of the rotor blade tooling structure 200 can be manufactured and combined to produce the final product. Moreover, the individual tooling blocks 210 may be joined to one another via any suitable securing mechanism such as, for example, disposing adhesive at the joints 215 between the filler material 211 of a first tooling block 210 and the reinforcing structural layer 212 of an adjacent tooling block 210. Any other suitable securing mechanism may additionally or alternatively be used including, for example, screws, bolts, staples or the like.

In some embodiments, such as that illustrated in FIGS. 4 and 5, each of the tooling blocks 210 may comprise a uniform rectangular shape such that when the tooling blocks 210 are joined, they form a structure with substantially uniform sides. However, in some embodiments, each of the tooling blocks 210 may comprise different dimensions (e.g., length, height and/or width) or shapes (e.g., square, rectangular, trapezoidal, circular, etc.) such that the joined tooling blocks 210 comprise a structure with varying contours about one or more of its dimensions.

Referring now to FIGS. 3, 5 and 6, the method 100 further comprises shaping the series of tooling blocks 210 into a rotor blade tooling structure 200 in step 130. Shaping can the series of tooling blocks 210 in step 130 can comprise removing material from the series of tooling blocks 210 to form a profile of a rotor blade tooling structure 200 as will become appreciated herein. The material removed from the series of tooling blocks 210 during shaping in step 130 can comprise one or more portions of filler material 211, one or more portions of reinforcing structural layers 212 or combinations thereof.

Shaping the series of tooling blocks 210 in step 130 may be performed using any suitable device and/or method available to remove one or more portions of filler material 211 and/or reinforcing structural layer 212. For example, in some embodiments, the series of tooling blocks 210 may be shaped into the rotor blade tooling structure 200 in step 130 via a computer numerical control (CNC) machine or any other precision machining equipment. In some embodiments, the series of tooling blocks 210 may be shaped into the rotor blade tooling structure 200 in step 130 via other suitable tools and/or equipment such as various manual and/or powered cutting tools (e.g., knives, saws and the like), grinding/sanding tools (e.g., electrical grinders, electrical sanders, san paper and the like), and/or any other suitable tools/equipment known in the art.

The rotor blade tooling structure 200 shaped in step 130 can comprise any tooling structure used in the manufacturing of a rotor blade (illustrated as element 16 in FIGS. 1 and 2). For example, in some embodiments, such as that illustrated in FIGS. 6-9, the rotor blade tooling structure 200 can comprise a rotor blade plug used to form a rotor blade mold which, in turn, is used to manufacture the rotor blades themselves. In such embodiments, the rotor blade tooling structure 200 can comprise a positive profile of a rotor blade such as including an outwardly protruding portion 216 that can resemble the aerodynamic profile of a rotor blade. For example, the originally joined series of tooling blocks 210 (illustrated in FIG. 5) may have material removed from both its upper corners to leave the outwardly protruding portion 216 (illustrated in FIG. 6).

In some embodiments, the rotor blade tooling structure 200 can comprise the rotor blade mold itself comprising a negative profile of a rotor blade. In such embodiments, the joined series of tooling blocks 210 (illustrated in FIG. 5) may have material removed from the upper middle surface to create a concave void (e.g., an inverse of the outwardly protruding portion 216 illustrated in FIG. 6) such that a blade may be manufactured by laying down material in the concave void of the rotor blade mold. While specific structural examples of possible rotor blade tooling structures 200 have been presented, it should be appreciated that rotor blade tooling structures 200 may additionally or alternatively comprise any other suitable size and/or shape that can be used in the manufacturing of a rotor blade.

Referring to FIG. 6, in some embodiments the rotor blade tooling structure 200 may comprise a manufacturing mounting slot 217. The manufacturing mounting slot 217 can comprise a portion of the rotor blade tooling structure 200 shaped to receive or be received by auxiliary equipment when being shaped in step 130. For example, as illustrated, a common base frame 300 can include a manufacturing mounting appendage 310 that can be used to secure the rotor blade tooling structure 200 during its manufacturing. In some embodiments, shaping the series of tooling blocks 210 into the rotor blade tooling structure 200 in step 130 can first comprise cutting or machining the manufacturing mounting slot 217. Such embodiments can thereby allow for mounting of the tooling blocks 210 for the remainder of the shaping in step 130. For example, a common base frame 300 affiliated with a CNC machine may then be able to secure the tooling blocks 210 throughout the remainder of the shaping process. In some embodiments, the manufacturing mounting slot 217 can be cut or machined from the tooling blocks 210 simultaneously with or after the reminder of the profile is machined from the series of tooling blocks 210. In such embodiments, the manufacturing mounting slot 217 may still be used for universal mounting/securing when applying optional finishing steps (e.g., adding stringers, machining paste and/or cover skin) as will become appreciated herein. The common base frame 300 may be temporarily secured (i.e., releasably secured) using bolts, clasps, straps, or any other suitable mechanism or combinations thereof.

Referring now to FIGS. 3 and 6-9, the method 100 may optionally comprise additional finishing of the exterior surface of the rotor blade tooling structure 200 in one or more additional finishing steps 140. The one or more additional finishing steps 140 can comprise optional modifications to the rotor blade tooling structure 200 to modify its structural support, exterior surface or any other property that may impact rotor blade manufacturing using the rotor blade tooling structure 200. For example, in some embodiments, an additional finishing step 140 may comprise cutting one or more grooves into the rotor blade tooling structure 200 and disposing and securing one or more stringers 231 in the one or more grooves. The one or more stringers 231 may be disposed in the spanwise direction z to further secure one or more of the individual tooling blocks 210 together in the rotor blade tooling structure 200.

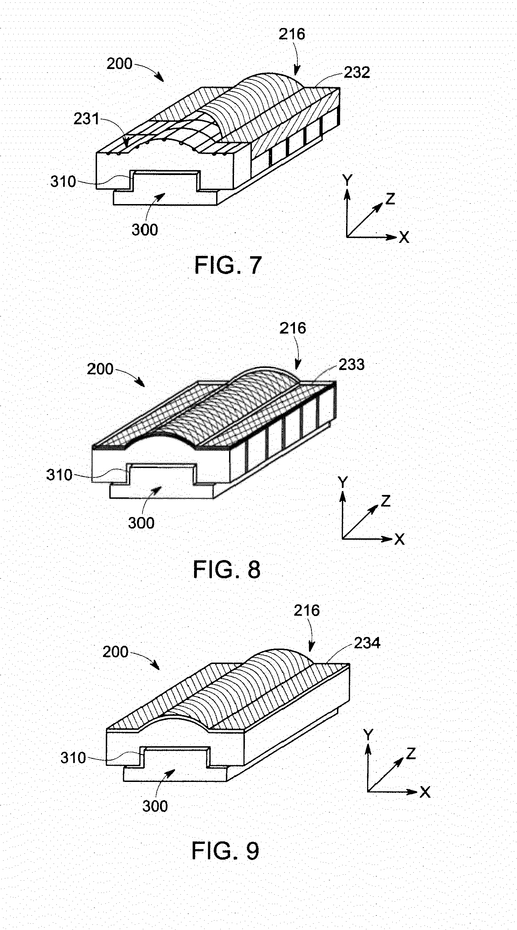

As best illustrated in FIG. 7, in some embodiments, a cover sheet 232 may be disposed on all or part of the surface of the rotor blade tooling structure 200. The cover sheet 232 may comprise any material or materials to provide exterior strength and/or support to the rotor blade tooling structure 200 such as to assist in the downstream manufacturing of rotor blade molds (if the rotor blade tooling structure 200 comprises a rotor blade plug) or rotor blades themselves (if the rotor blade tooling structure 200 comprises a rotor blade mold). In some embodiments, the cover sheet 232 may comprise a material similar to or the same as the reinforcing structural layer 212 used in the tooling blocks 210. For example, in some embodiments, the cover sheet 232 may comprise a fiber-reinforced laminate. In some embodiments, the cover sheet 232 may comprise a spray-on surface coating, such as a polyurethane elastomeric spray-on compound. In even some embodiments, the cover sheet 232 may comprise a thermoplastic-based coating formed using a heat-shrink wrapping process and/or a heat-shrink tubing process. Furthermore, in embodiments comprising a cover sheet 232, the cover sheet 232 may be disposed on top of stringers 231 if present, or may be disposed directly on top of the surface of the rotor blade tooling structure 200.

Still referring to FIG. 7, in some embodiments, one or more heating systems may optionally be installed with the cover sheet 232. The one or more heating systems can, for example, be utilized to decrease cure time during downstream manufacturing to increase the overall production rate. The heating systems can comprise any type of heating system to heat one or more surface portions of the rotor blade tooling structure 200 such as, for example, electrical heating systems, fluid heating systems, and/or blanket heating systems. Where present, the heating systems may be disposed below the cover sheet 232, above the cover sheet 232, integral with the cover sheet 232 or combinations thereof.

Referring now to FIGS. 3, 7 and 8, in some embodiments the one or more additional finishing steps 140 can comprise applying machining paste 233 to the surface of the rotor blade tooling structure 200 (such as on the surface of a cover sheet 232 when present). The machining paste 233 may allow for the building up of the rotor blade tooling structure 200 such that it becomes oversized from the final product. As seen in FIG. 9, the layer of machining paste 233 may then be machined to produce a finished surface 234. Depending on the product type of the rotor blade tooling structure 200 (e.g., a rotor blade plug or rotor blade mold), the finished surface 234 can be configured to assist in the precise production of rotor blade molds, rotor blades themselves or any other similar products that may be utilized in the process.

It should now be appreciated that rotor blade tooling structures can be manufactured for the tooling of rotor blades for wind turbines. Tooling blocks comprising filler material and reinforcing structural layers can joined into a series and shaped to more quickly and economically produce various rotor blade tooling structures such as rotor blade plugs and/or rotor blade molds. By joining the tooling blocks into a series, the reinforcing structural layers can act as ribs to provide stiffness and/or strength to a relatively low-cost building block for a rotor blade tooling structure. These rotor blade tooling structures may thereby contribute to relatively quick and cost effective manufacturing of rotor blades such as those utilized in wind turbines.

While the disclosure has been described in detail in connection with certain specific embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method of manufacturing a tooling structure for tooling a fiber reinforced plastic component, the method comprising:
   providing a plurality of tooling blocks each comprising a filler material and a reinforcing structural layer;
   joining the plurality of tooling blocks into a series of tooling blocks extending in a lengthwise direction, wherein the reinforcing structural layers form a plurality of cross-sectional ribs; and
   shaping the series of tooling blocks into the tooling structure.
2. The method of clause 1, wherein the tooling structure comprises a plug comprising a positive profile of the fiber reinforced plastic component.
3. The method of any preceding clause, wherein the tooling structure comprises a mold comprising a negative profile of the fiber reinforced plastic component.
4. The method of any preceding clause, wherein the filler material comprises at least a foam material.
5. The method of any preceding clause, wherein the reinforcing structural layer comprises at least a laminate composite material.
6. The method of any preceding clause, wherein providing a plurality of tooling blocks comprises sectioning off the plurality of tooling blocks from at least one tooling block sheet.
7. The method of any preceding clause, wherein joining the plurality of tooling blocks into a series of tooling blocks comprises disposing an adhesive between the filler material of a first tooling block and the reinforcing structural layer of an adjacent tooling block.
8. The method of any preceding clause, shaping the series of tooling blocks into the tooling structure comprises removing portions of filler material.
9. The method of any preceding clause, wherein a common base frame is used to temporarily secure the series of tooling blocks are they are shaped into the tooling structure.
10. The method of any preceding clause further comprising additional exterior finishing of the exterior surface of tooling structure.
11. The method of any preceding clause, wherein additional exterior finishing of the exterior surface comprises cutting one or more grooves into the exterior surface of the tooling structure along the lengthwise direction and disposing stringers into one or more of the grooves to secure one or more of the individual tooling blocks together.
12. The method of any preceding clause, wherein additional exterior finishing of the exterior surface comprises disposing a cover sheet onto the exterior surface of the tooling structure.
13. The method of any preceding clause, wherein the cover sheet comprises at least a laminate composite material.
14. The method of any preceding clause, wherein one or more heating systems are installed in the tooling structure to heat at least a portion of the cover sheet.
15. A tooling structure for tooling a fiber reinforced plastic component, the tooling structure comprising:
   a plurality of tooling blocks each comprising a filler material and a reinforcing structural layer, wherein:
      the plurality of tooling blocks are joined in a series of tooling blocks extending in a lengthwise direction, wherein the reinforcing structural layers form a plurality of cross-sectional ribs separated by the filler material; and
      the series of tooling blocks are shaped into the tooling structure.
16. The tooling structure of any preceding clause, wherein the tooling structure comprises a plug comprising a positive profile of the fiber reinforced plastic component.
17. The tooling structure of any preceding clause, wherein the tooling structure comprises a mold comprising a negative profile of the fiber reinforced plastic component.
18. The tooling structure of any preceding clause, wherein the filler material comprises at least a foam material.
19. The tooling structure of any preceding clause, wherein the reinforcing structural layer comprises at least a laminate composite material.
20. The tooling structure of any preceding clause, wherein the tooling structure comprises a manufacturing mounting slot to be temporarily secured to a common base frame.

## Claims

1. A method of manufacturing a tooling structure (200) for tooling a fiber reinforced plastic component, the method comprising:
providing a plurality of tooling blocks (210) each comprising a filler material (211) and a reinforcing structural layer (212);
joining the plurality of tooling blocks (210) into a series of tooling blocks extending in a lengthwise direction, wherein the reinforcing structural layers (212) form a plurality of cross-sectional ribs; and
shaping the series of tooling blocks (210) into the tooling structure (200).

2. The method of claim 1, wherein the tooling structure (200) comprises a plug comprising a positive profile of the fiber reinforced plastic component.

3. The method of any preceding claim, wherein the tooling structure (200) comprises a mold comprising a negative profile of the fiber reinforced plastic component.

4. The method of any preceding claim, wherein providing a plurality of tooling blocks (210) comprises sectioning off the plurality of tooling blocks from at least one tooling block sheet (209).

5. The method of any preceding claim, wherein joining the plurality of tooling blocks (210) into a series of tooling blocks comprises disposing an adhesive between the filler material of a first tooling block and the reinforcing structural layer of an adjacent tooling block.

6. The method of any preceding claim, shaping the series of tooling blocks (210) into the tooling structure comprises removing portions of filler material (211).

7. The method of any preceding claim, wherein a common base frame (300) is used to temporarily secure the series of tooling blocks (210) are they are shaped into the tooling structure (200).

8. The method of any preceding claim, wherein additional exterior finishing of the exterior surface comprises cutting one or more grooves into the exterior surface of the tooling (200) structure along the lengthwise direction and disposing stringers (231) into one or more of the grooves to secure one or more of the individual tooling blocks (210) together.

9. The method of any preceding claim, wherein one or more heating systems are installed in the tooling structure (200) to heat at least a portion of the cover sheet (232).

10. A tooling structure (200) for tooling a fiber reinforced plastic component, the tooling structure (200) comprising:
a plurality of tooling blocks (210) each comprising a filler material (211) and a reinforcing structural layer (212), wherein:
the plurality of tooling blocks (210) are joined in a series of tooling blocks extending in a lengthwise direction, wherein the reinforcing structural layers form a plurality of cross-sectional ribs separated by the filler material (211); and
the series of tooling blocks (210) are shaped into the tooling structure (200).

11. The tooling structure (200) of claim 10, wherein the tooling structure comprises a plug comprising a positive profile of the fiber reinforced plastic component.

12. The tooling structure (200) of claim 10 or claim 11, wherein the tooling structure comprises a mold comprising a negative profile of the fiber reinforced plastic component.

13. The tooling structure (200) of any of claims 10 to 12, wherein the filler material (211) comprises at least a foam material.

14. The tooling structure (200) of any of claims 10 to 13, wherein the reinforcing structural layer (212) comprises at least a laminate composite material.

15. The tooling structure (200) of any of claims 10 to 14, wherein the tooling structure (200) comprises a manufacturing mounting slot to be temporarily secured to a common base frame (300).
